(19) Europäisches Patentamt / European Patent Office / Office européen des brevets

(11) **EP 3 593 612 B1**

(12) **EUROPEAN PATENT SPECIFICATION**

(45) Date of publication and mention
of the grant of the patent:
**15.06.2022 Bulletin 2022/24**

(21) Application number: **19184124.6**

(22) Date of filing: **03.07.2019**

(51) International Patent Classification (IPC):
*A01B 63/111* (2006.01)    *A01B 79/00* (2006.01)

(52) Cooperative Patent Classification (CPC):
**A01B 63/1112; A01B 79/00**

(54) **CONTROL AND COMMAND SYSTEM AND METHOD FOR AGRICULTURAL MACHINES**

STEUER- UND BEFEHLSSYSTEM UND VERFAHREN FÜR LANDWIRTSCHAFTLICHE MASCHINEN

SYSTÈME DE CÔNTROL ET DE COMMANDE ET PROCÉDÉ POUR MACHINES AGRICOLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.07.2018 IT 201800006960**

(43) Date of publication of application:
**15.01.2020 Bulletin 2020/03**

(73) Proprietor: **Torrico S.r.l.**
**36053 Gambellara (VI) (IT)**

(72) Inventors:
• **PEGORARO, Giovanni**
**36053 GAMBELLARA (VI) (IT)**
• **ZAMBON, Mattero**
**36053 GAMBELLARA (VI) (IT)**

(74) Representative: **Burchielli, Riccardo et al**
**Barzano & Zanardo Roma S.p.A.**
**Via Piemonte 26**
**00187 Roma (IT)**

(56) References cited:
**EP-A1- 0 776 598      EP-A1- 0 878 117**
**EP-A1- 2 820 931      AT-A2- 508 580**

**Description**

The present invention generally relates to an electronic system and method for monitoring and actuating agricultural machines for soil processing.

In particular, the system is mainly devoted to machines equipped with a power take-off (harrows, milling machines, rotary cultivators, etc.) but it can also be used for passive processing machines, such as plows, subsoilers, trailed cultivators, etc.

The system involves the use of various types of electronic components, such as sensors of various types (ultrasounds, inclinometers, temperature probes, inductive sensors, load cells), as well as solenoid valves for operating hydraulic systems and electric actuators.

All said components communicate on a BUS network, therefore with a single cable it is possible to reach all the parts of the machine without having a complex wiring.

The BUS network is particularly suitable for said machines because said BUS network allows to add a lot of electronic components without changing the wiring, but only by adding parts; this feature gives the system a relevant modularity, so that the system can be adapted to various types of machines and/or to various measures and to different technological levels.

A handheld control monitor, placed in the cab of the agricultural machine and connected to a 12 Volt DC socket, allows connection, via an application software and via a BUS cable, to the system where the sensors are located. It is also possible to insert a control unit of the system's utilities to control respective solenoid valves for managing hydraulic movements; therefore, a single hydraulic connection to the agricultural machine is enough to manage several users.

Furthermore, instead of using the control monitor, a communication module can be used, which allows a direct communication with the electronic system of the agricultural machine; all data can be collected and managed by a remote and sharing transmission system (in cloud).

The electronic systems mentioned above are advantageously usable for generic agricultural machines, which are equipped with a rotor shaft with a plurality of blades rotating around their own axis, so that when the rotor shaft approaches the ground and is rotated around its own axis, the blades are able to work the soil.

Different processes can be obtained by using said agricultural machines equipped with blades and having different shapes and extensions and operated at selected speeds and rotation directions, in order to perform a hoeing or a refinement of the soil or a burial operation of stones, etc.

For example, a harrow (also called crusher) is an agricultural machine brought or pulled by a tractor and used for complementary works in agriculture. In particular, the harrow is used, after plowing, to crush the clods and to break up the soil for sowing; in other cases, the harrow is also able to bury the fertilizer spread on the ground and/or to break the turf. Similarly, a rotary harrow is a machine that is very similar to a cutter and its mechanical action on the soil, suitable for crushing the clods, is not due to the dragging but to the rotation given by the tractor's power take-off to horizontal drums equipped with vertical teeth (knives).

A first practical application of the above mentioned electronic system is really carried out on the rotary harrow and the following activities can be monitored:

- controlling the temperature of the transmission box;
- controlling revolutions at the entrance of the transmission box, so as to identify incorrect rotation regimes operated by the user and to identify any stoppages of the torque limiters;
- signaling to the user important or critical information, such as counting of actual, partial or total working hours, sending alarm signals related to the exceeding of preset temperature thresholds, sending alarms related to the stopping of torque limiters, signaling recommended maintenance based on the working hours;
- recording useful information for post-sales assistance (alarms, counts, etc.).

The problem underlying the present invention is to propose an agricultural machine and, in particular, a rotary harrow, more versatile and efficient than traditional agricultural equipments, thanks to the use of a particularly effective electronic control and actuating system.

A control and command system and method for agricultural machines, with technical features that can be considered the closest state of the art to the following invention, features that are present in the preamble of the attached claim 1, are described, for example, in the patent documents EP077598A1 (D1), EP2820931A1 (D2), EP0878117A1 (D3) and AT508580A2 (D4). Within the scope of the above mentioned requirements, it is an object of the present invention to propose an agricultural machine and, in particular, a rotary harrow, which incorporates a particularly efficient system and method for controlling the working depth and the state of wear of the machine tools. Another object of the present invention is to provide an agricultural machine equipped with an electronic control system which can be used to check and control the working depth, the depth of the refining bar, the opening and closing of the machine, the exclusion of the seeding bar and/or the management of the row discs, all of said operations being performed directly from a monitor provided on the tractor.

Another object of the invention is to propose an agricultural machine and, in particular, a rotary harrow, equipped with an electronic control system that can be directly viewed by the user on a monitor available on the tractor. This object, as well as other objects that will become more clear hereinafter, are achieved by a control and command system for agricultural machines according to the attached claim 1 attached, and by a related method according to claim 4.

Other detailed features of the control and command system and method according to the invention are included in the dependent claims.

Further characteristics and advantages of the invention will become more clear from the description of a preferred but not exclusive embodiment of a control and command system for agricultural machines, according to the present invention, illustrated only by way of non-limitative example in the following drawings, in which:

- fig. 1 shows a top plan view of an agricultural machine, in particular a rotary harrow, equipped with an electronic control and command system, according to the invention;
- fig. 2 shows an enlarged side view of the agricultural machine of fig. 1, according to the present invention;
- fig. 3A, 3B, 3C and 3D show a series of steps carried out by the control and command method, according to the present invention.

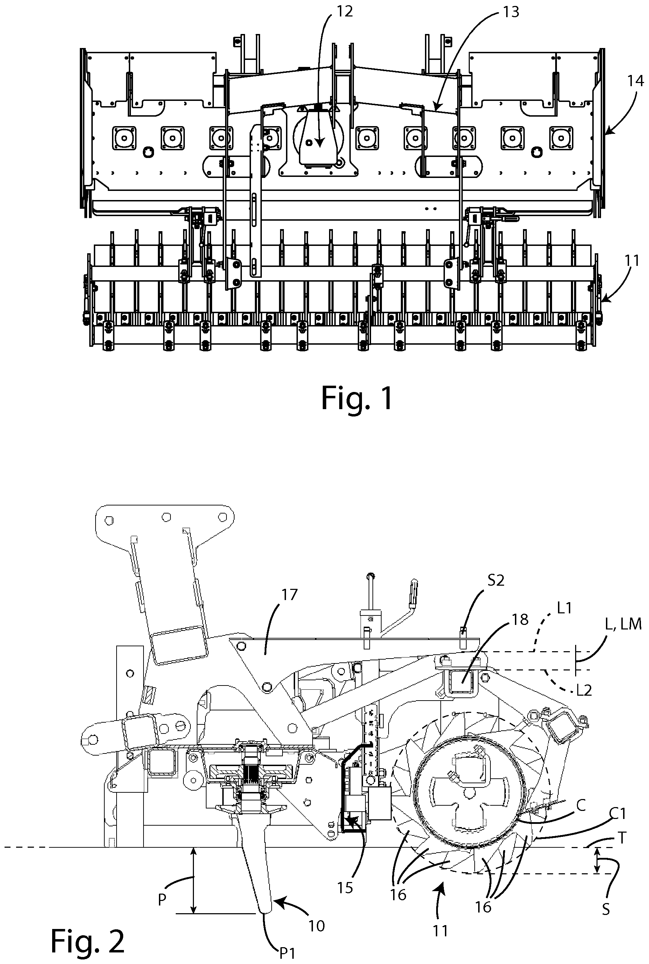

With particular reference to the above mentioned fig. 1 and 2, which show the preferred embodiment of a rotary harrow equipped with an electronic control and command system according to the present invention, said agricultural machine, which is operated by a tractor, comprises a series of tools 10, such as subsoilers or scarifiers, that are capable of shredding the soil at low depths, said tools 10 being connected to a floating roller 11, mounted on a frame shaped as a parallelogram, and/or to rear packing rollers shaped as a cage, a spiral and/or with spikes; the above structure provides an optimal soil tillage and the best conditions for a simultaneous or subsequent possible passage of a seeding machine.

Advantageously, the agricultural machine generally has a three-point power socket 12 for a mechanical and electrical connection to the tractor, a transmission 13 with three gear shifts and a central speed change, and a foldable load-bearing frame 14, which limits the overall dimensions during transport and allows a more fast and safe road driving.

Moreover, said agricultural machine can also have a rear coupling for a mechanical connection of a sowing machine, so as to sowing the soil immediately after working it.

In case the agricultural machine is a rotary harrow, said machine also has a refinement bar 15, which is a relevant element for the working quality of the rotary harrow, since its role is to hold the soil inside the working chamber of the harrow, thus increasing the refinement of the worked soil.

The electronic control and command system and the method thereof, which are the objects of the present invention, allow in particular to control the instantaneous working depth P of the tools 10.

According to said control method, an initial basic condition is provided, according to which the agricultural machine is arranged in a perfect horizontally direction on a rigid plane (for example, made of concrete), with the outermost circumference of the roller 11 (corresponding to the circumference C if the roller 11 is a smooth or flat type roller, or corresponding to the circumference C1 connecting the outermost points of the spikes of the roller 11 if said roller 11 is equipped with spikes 16) contacting a reference plane and with the tools 10 protruding beyond said reference plane (since they are configured to be inserted into the ground). In particular, according to said initial reference condition, the instantaneous working depth P is defined as the distance between the reference plane, which preferably corresponds to the surface level T of the ground, and the most extreme point P1 between the tools 10 positioned beyond the reference plane and inserted into the ground.

In order to place the agricultural machine in said initial reference condition, an angular sensor (not shown) is used, which allows the user to adjust the machine in a horizontal position by acting on a tie-rod of the three-point attachment connection 12 for connecting the machine to the tractor.

In said initial reference condition, a sensor S2, preferably an ultrasonic sensor, measures the height difference L, with respect to the surface level of the ground T (above the soil), between a horizontal level L1 of a first reference or fixed support 17 of the frame 14 coupled with the agricultural machine (machine position reference) and a horizontal level L2 of a second reference or fixed support 18 of the frame coupled with the roller 11 (roller position reference); in particular, the above references 17, 18 of the agricultural machine and of the roller 11 may be chosen as any points, respectively, of the agricultural machine and of the roller 11, with respect to a fixed reference, such as the surface level of the ground T, since the measurement that matters, that is to say the height difference L, is the difference between the levels L1 and L2.

The same sensor S2, which is preferably connected to the support 17 and which is preferably arranged perpendicularly to the horizontal levels L1, L2 to be measured, is used to measure the same height difference L, with respect to the ground level T, in successive times; in this case, the length or height difference L is measured instantaneously by the sensor S2 at each working time.

The electronic control and command system, according to the invention, therefore stores the measurement of the LM level (measurement of the reference height L or zero machine with the machine resting on the ground), which is overwritten every time it is restored a new initial reference condition, and instantly measures the height differences L at each working time. Since the instantaneous measurement of the height L is proportional to the instantaneous measurement of the working depth P and to the sinking measure S of the roller 11 beyond the surface level of the ground T (equal to the height of the spikes of the roller 11 and possibly equal to zero when flat or smooth rollers 11 are used), it follows that the instantaneous measurement of the working depth P is equal to:

$$(LM - L) + S.$$

If the measurement of LM is equal to L, then the difference between the initial measurement and the instantaneous measurement of the working depth P (without taking into account the sinking measure S) is zero and therefore there are no depth variations and no wear of the tools 10 can be detected.

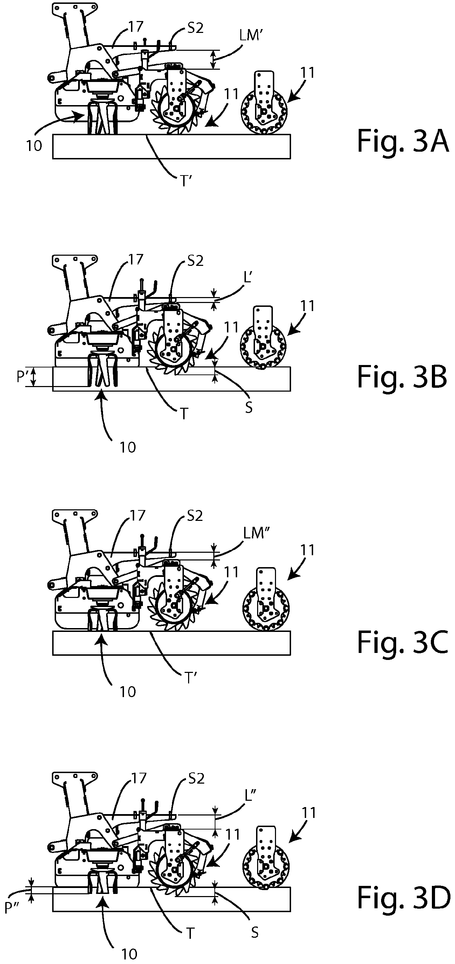

Fig. 3A, 3B, 3C and 3D show a series of operating steps employed by the electronic control system according to the invention for calculating the working depth P and two different types of rollers 11 are shown; this methodology can be also used to take over the wear of the tools 10 and to eventually restore certain depth conditions, by using a special control algorithm.

In particular, during a first step (fig. 3A), a starting measurement LM' is stored when the tools 10 and the machine roller 11 are placed on a rigid reference surface T', while, during a second step (fig. 3B), the calculation P' = (LM' - L') + S is performed, with L' is equal to the measurement carried out during working the soil, i.e. with the tools 10 and the roller 11 below the level of the ground T.

In order to take over the wear of the tools 10, according to the invention, a further setting step is performed (fig. 3C), with the tools 10 eventually worn and the roller 11 placed on the rigid reference surface T', during which the LM measure is stored (LM" is less than LM' if the tools 10 are worn).

Now, it is possible to obtain the depth measure by applying the calculation P" = (LM" - L") + S, where L" is a measure made when the agricultural machine is working.

In this way, it is possible to control the inclination of the agricultural machine during the work and the instantaneous depth P of the tools 10 in working conditions and it is also possible to set a measurement of the working depth based on the consumption of the tools 10.

Still according to exemplary and preferred but not limiting embodiments of the invention, the sinking measure S is not performed, but S may be set at first as a constant value, said value being different depending on the type of the roller 11 and on the type of the soil.

Finally, by means of the software used in the electronic system according to the present invention, it is possible to signal to the user the overcoming of a predetermined threshold of consumption of the tools 10, thus avoiding an incorrect use of the machine beyond certain limits.

It is therefore understood that the control and command system of an agricultural machine, according to the invention, achieves the intended aim and objects, thus allowing an easy control of the working depth and of the wear of tools, simply by showing the above mentioned measures on a special display placed on the tractor and available to the user.

The invention thus conceived is susceptible of numerous modifications and variations, all of which are within the scope of protection of the appended claims.

Moreover, all the details may be replaced by other technically equivalent elements.

In practice, the materials used, as well as the contingent shapes and dimensions, may be varied according to the contingent requirements and the state of the art.

Where the constructive characteristics and the techniques mentioned in the following claims are followed by reference signs or numbers, these reference signs or numbers have been applied with the sole purpose of increasing the intelligibility of the claims themselves and, consequently, they do not constitute a limitation to the interpretation of each element identified by said signs or reference numbers.

**Claims**

1. Control and command system for agricultural machines, in which an agricultural machine has

   - a supporting frame (14); a series of tools (10) adapted for shredding the ground in depth;
   - a roller (11), to which is connected said series of tools (10), said roller (11) being provided with spikes (16);
   - a sensor (S2), able to measure, in a first initial condition according to

     which said agricultural machine rests on a fixed horizontal reference plane (T), a height difference (LM), with respect to said fixed reference plane (T) in which in said first initial reference condition, said agricultural machine is in horizontal position on a rigid plane with the outermost circumference (C, C1) of the roller (11) of the machine in contact with said rigid plane and the tools (10) of the agricultural machine placed beyond said rigid plane;

   - at least a means for storing what is measured by said sensor (S2), so as to obtain an instantaneous depth measurement (P) of the tools (10) beyond the fixed reference plane (T),

   **characterized in** comprising:

   - a first support (17) fixed to said frame (14) of the agricultural machine from which is calculated a first horizontal level (L1) with respect to said fixed reference plane (T)

- and a second support (18) fixed to said roller (11) from which is calculated a second horizontal level (L2) with respect to said fixed reference plane (T), said height difference (LM) being measured between said first horizontal level (L1) and said second horizontal level (L2),

said sensor (S2) being configured to measure instantaneous differences (L) of said height difference (LM) at successive times with respect to said initial condition and said control system being also able, through said at least a means for storing, by using a software application, to store said height differences (LM) and to measure said instantaneous height differences (L), as well as to store a predefined value relative to a sinking measure (S) is equal to a difference in height between a maximum height of at least one of said spikes (16) of said roller (11) beyond said fixed reference plane (T).

2. Control and command system according to claim 1, **characterized in that** said sensor (S2) is an ultrasonic sensor.

3. Control and command system according to at least one of the previous claims, **characterized in that** said sensor (S2) is connected to said first support (17) and is arranged perpendicular to said first and second horizontal levels (L1, L2).

4. Control and command method for agricultural machines implemented by means of a system according to at least one of the previous claims, **characterized in that** said method provides for the following steps:

- measuring and storing a difference of height (LM), with respect to said rigid plane, between the first horizontal level (L1) and the second horizontal level (L2);
- measuring instantaneous differences (L) of said height (LM) in working conditions and at successive times with respect to said initial reference condition;
- storing a predefined value of a sinking measure (S) of said roller (11) beyond said rigid plane;
- counting a series of instantaneous measures of a working depth variation (P) of said tools (10) with respect to a reference surface level (T).

5. Control and command method according to claim 4, **characterized in that** said height difference (LM) measuring and storing step is carried out on said agricultural machine equipped both with new tools and with tools worn out (10).

6. Control and command method according to at least one of the claims 4 or 5, **characterized in that** said working depth (P) is defined as the distance between said reference surface level (T) and the terminal portion of said tools (10) which is more far from said reference surface level (T).

7. Control and command method according to at least one of the claims 4, 5 or 6, **characterized in that**, by means of said software used in said control system, a predetermined consumption threshold of said tools (10) is set, so as to indicate an exceeding of said threshold after said height difference (LM) measuring and storing step.

**Patentansprüche**

1. Steuerungs- und Bediensystem für landwirtschaftliche Maschinen, wobei eine landwirtschaftliche Maschine folgendes aufweist:

- einen tragenden Rahmen (14);

eine Reihe von Werkzeugen (10), angepasst, um den Boden in der Tiefe zu zerkleinern;

- eine Walze (11), woran die besagte Reihe von Werkzeugen (10) befestigt ist. Besagte Walze (11) verfügt über Dornen (16);
- einen Sensor (S2), der in einem ersten Anfangszustand, in welchem die besagte landwirtschaftliche Maschine auf einer festen horizontalen Bezugsebene (T) ruht, einen Höhenunterschied (LM) in Bezug auf die besagte feste Bezugsebene (T) messen kann wobei sich die besagte landwirtschaftliche Maschine in dem besagten ersten Anfangsbezugszustand in horizontaler Position auf einer starren Ebene befindet, wobei der äußerste Umfang (C, C1) der Walze (11) der Maschine in Kontakt mit der besagten starren Ebene und den Werkzeugen (10) der außerhalb der besagten starren Ebene angeordneten landwirtschaftlichen Maschine steht;
- mindestens ein Mittel zum Speichern dessen, was von dem besagten Sensor (S2) gemessen wird, um eine sofortige Tiefenmessung (P) der Werkzeuge (10) über die feste Referenzebene (T) hinaus zu erhalten, **dadurch gekennzeichnet, dass** es umfasst:
- eine erste Stütze (17), befestigt am besagte Rahmen (14) der landwirtschaftlichen Maschine, woraus eine erste horizontale Ebene (L1) in Bezug zur besagten festen Referenzebene (T) berechnet wird,
- und eine zweite Stütze (18), die an der besagten Walze (11) befestigt ist, von der aus eine zweite horizontale Ebene (L2) in Bezug auf die besagte feste Referenzebene (T) berechnet wird, wobei die besagte Höhendifferenz (LM) zwischen der besagten ersten horizontalen Ebene (L1) und der besagten zweiten horizontalen Ebene (L2) gemessen wird, wobei der besagte Sensor (S2) so konfiguriert ist, dass er momentane Unterschiede (L) der besagten Höhendifferenz (LM) zu aufeinanderfolgenden Zeitpunkten in Bezug auf den besagten Anfangszustand misst,

und wobei das Steuersystem auch in der Lage ist, durch das besagte mindestens eine Mittel zum Speichern unter Verwendung einer Softwareanwendung die besagten Höhenunterschiede (LM) zu speichern und die besagten momentanen Höhenunterschiede (L) zu messen, sowie zum Speichern eines vordefinierten Werts relativ zu einem Einsinkmaß (S), welches gleich einem Höhenunterschied zwischen einer maximalen Höhe von mindestens einem der besagten Dornen (16) der besagten Walze (11) jenseits der besagten Bezugsebene (T) ist.

2. Steuerungs- und Bediensystem nach Anspruch 1, **dadurch gekennzeichnet, dass** der besagte Sensor (S2) ein Ultraschallsensor ist.

3. Steuerungs- und Bediensystem nach mindestens einem der vorhergehenden Ansprüche, **dadurch gekennzeichnet, dass** der besagte Sensor (S2) mit der besagten ersten Stütze (17) verbunden und senkrecht zu der besagten ersten und zweiten horizontalen Ebene (L1, L2) angeordnet ist.

4. Steuerungs- und Bedienverfahren für landwirtschaftliche Maschinen, verwirklicht mittels eines Systems nach mindestens einem der vorhergehenden Ansprüche, **dadurch gekennzeichnet, dass** das besagte Verfahren die folgenden Schritte vorsieht:

   - Messen und Speichern einer Höhendifferenz (LM) in Bezug auf die besagte starre Ebene zwischen der ersten horizontalen Ebene (L1) und der zweiten horizontalen Ebene (L2);
   - Messen von momentanen Unterschieden (L) der besagten Höhe (LM) unter Arbeitsbedingungen und zu aufeinanderfolgenden Zeiten mit Bezug zur besagten anfänglichen Referenz-Bedingung;
   - Speichern eines vordefinierten Wertes des Einsinkmaßes (S) der besagten Walze (11) jenseits der besagten festen Ebene;
   - Abzählen einer Reihe von augenblicklichen Maßnahmen einer Änderung der Arbeitstiefe (P) der besagten Werkzeuge (10) im Vergleich zur Referenz-Oberflächenhöhe (T).

5. Steuerungs- und Bedienverfahren nach Anspruch 4, **dadurch gekennzeichnet, dass** der Schritt des Messens und Speicherns der Höhendifferenz (LM) an der besagten landwirtschaftlichen Maschine durchgeführt wird, die sowohl mit neuen Werkzeugen als auch mit abgenutzten Werkzeugen ausgestattet ist (10).

6. Steuerungs- und Bedienverfahren nach mindestens einem der Ansprüche 4 oder 5, **dadurch gekennzeichnet, dass** die besagte Arbeitstiefe (P) als der Abstand zwischen der besagten Referenzoberflächenhöhe (T) und dem Endabschnitt der besagten Werkzeuge (10) definiert ist, der weiter entfernt ist von der besagten Referenzoberflächenhöhe (T).

7. Steuer und Bedienverfahren nach mindestens einem der Ansprüche 4, 5 oder 6, **dadurch gekennzeichnet, dass** mittels der besagten Software, welche im besagten Steuerungssystem verwendet wird, eine vorbestimmte Verbrauchsschwelle der besagten Werkzeuge (10) eingestellt wird, um eine Überschreitung dieses besagten Schwellwertes nach dem Mess- und Speicherschritt der Höhendifferenz (LM) anzuzeigen.

**Revendications**

1. Système de contrôle et de commande pour machines agricoles, dans lequel une machine agricole comporte

   - un châssis de support (14);

   une série d'outils (10) adaptés pour déchiqueter le sol en profondeur;

   - un rouleau (11), auquel est reliée ladite série d'outils (10), ledit rouleau (11) étant pourvu de pointes (16);
   - un capteur (S2), capable de mesurer, dans une première condition initiale selon laquelle ladite machine agricole repose sur un plan de référence horizontal fixe (T), une différence de hauteur (LM), par rapport audit plan de référence fixe (T) où dans ladite première condition de référence initiale, ladite machine agricole est en position horizontale sur un plan rigide avec la circonférence la plus extérieure (C, C1) du rouleau (11) de la machine en contact avec ledit plan rigide et les outils (10) de la machine agricole placés au-delà dudit plan rigide;
   - au moins un moyen pour mémoriser ce qui est mesuré par ledit capteur (S2), de manière à obtenir une mesure de profondeur instantanée (P) des outils (10) au-delà du plan de référence fixe (T), **caractérisé en ce qu'**il comprend:
   - un premier support (17) fixé audit châssis (14) de la machine agricole à partir duquel est calculé un premier niveau horizontal (L1) par rapport audit plan de référence fixe (T)

- et un deuxième support (18) fixé audit rouleau (11) à partir duquel est calculé un deuxième niveau horizontal (L2) par rapport audit plan de référence fixe (T), ladite différence de hauteur (LM) étant mesurée entre ledit premier niveau horizontal (L1) et ledit deuxième niveau horizontal (L2), ledit capteur (S2) étant configuré pour mesurer des différences instantanées (L) de ladite différence de hauteur (LM) à des instants successifs par rapport à ladite condition initiale et ledit système de commande étant également capable, par l'intermédiaire dudit au moins un moyen de mémorisation, en utilisant une application logicielle, de mémoriser lesdites différences de hauteur (LM) et de mesurer lesdites différences de hauteur instantanées (L), ainsi que de mémoriser une valeur prédéfinie relative à une mesure d'enfoncement (S) est égale à une différence de hauteur entre une hauteur maximale d'au moins un desdits picots (16) dudit rouleau (11) au-delà dudit plan de référence fixe (T).

2. Système de contrôle et de commande selon la revendication 1, **caractérisé en ce que** ledit capteur (S2) est un capteur à ultrasons.

3. Système de contrôle et de commande selon au moins l'une des revendications précédentes, **caractérisé en ce que** ledit capteur (S2) est relié audit premier support (17) et est disposé perpendiculairement auxdits premier et deuxième niveaux horizontaux (L1, L2).

4. Méthode de contrôle et de commande de machines agricoles mis en œuvre au moyen d'un système selon au moins l'une des revendications précédentes, **caractérisé en ce que** ladite méthode prévoit les étapes suivantes:

   - mesurer et mémoriser une différence de hauteur (LM), par rapport audit plan rigide, entre le premier niveau horizontal (L1) et le deuxième niveau horizontal (L2);
   - mesurer les différences instantanées (L) de ladite hauteur (LM) dans des conditions de travail et à des moments successifs par rapport à ladite condition de référence initiale;
   - mémoriser une valeur prédéfinie d'une mesure d'enfoncement (S) dudit rouleau (11) au-delà dudit plan rigide;
   - compter une série de mesures instantanées d'une variation de profondeur de travail (P) desdits outils (10) par rapport à un niveau de surface de référence (T).

5. Méthode de contrôle et de commande selon la revendication 4, **caractérisé en ce que** ladite étape de mesure et de mémorisation de la différence de hauteur (LM) est effectuée sur ladite machine agricole équipée à la fois d'outils neufs et d'outils usés (10).

6. Méthode de contrôle et de commande selon au moins l'une des revendications 4 ou 5, **caractérisé en ce que** ladite profondeur de travail (P) est définie comme la distance entre ledit niveau de surface de référence (T) et la partie terminale desdits outils (10) qui est la plus éloignée dudit niveau de surface de référence (T).

7. Méthode de contrôle et de commande selon au moins l'une des revendications 4, 5 ou 6, **caractérisé en ce que**, au moyen dudit logiciel utilisé dans ledit système de contrôle, on fixe un seuil de consommation prédéterminé desdits outils (10), de manière à signaler un dépassement dudit seuil après ladite étape de mesure et de mémorisation de la différence de hauteur (LM).

Fig. 1

Fig. 2

Fig. 3A

Fig. 3B

Fig. 3C

Fig. 3D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 077598 A1
- EP 2820931 A1
- EP 0878117 A1
- AT 508580 A2